# EUROPÄISCHE PATENTSCHRIFT

(11) **EP 0 416 374 B1**
(45) Veröffentlichungstag und Bekanntmachung des Hinweises auf die Patenterteilung: **10.11.1993**
(21) Anmeldenummer: 90116124.0
(22) Anmeldetag: 23.08.1990
(51) Int. Cl.: A01B 13/08, A01B 49/02

(54) **Grubber**
Cultivator
Outil d'ameublissement

(30) Priorität: 02.09.1989 DE 3929204
(43) Veröffentlichungstag der Anmeldung: 13.03.1991
(73) Patentinhaber: Amazonen-Werke H. Dreyer GmbH & Co. KG, D-49205 Hasbergen (DE)
(72) Erfinder: Gattermann, Bernd, D-2872 Hude 1 (DE)

(56) Entgegenhaltungen:
- EP-A- 0 046 200
- DE-A- 3 019 677
- DE-A- 3 723 615
- US-A- 3 762 483

## Beschreibung

Die Erfindung betrifft einen Grubber, insbesondere Tiefenlockerer zur Kombination mit einer nachgeordneten zapfwellenangetriebenen Bodenbearbeitungsmaschine gemäß des Oberbegriffes des Patentanspruches 1.

Ein derartiger Grubber ist beispielsweise durch die deutsche Offenlegungsschrift 34 39 516 bekannt. Derartige Grubber weisen quer zur Fahrtrichtung schmale Stiele auf, an deren unteren Enden Flügelschare zur Bodenlockerung angeordnet sind. Wenn derartige Grubber zur Tiefenlockerung auf mit Pflanzen oder Stroh bedeckten Flächen eingesetzt werden, setzt sich sehr schnell die sich auf der Bodenoberfläche befindlichen Stroh- und Pflanzenteile an den Grubberstielen fest. Nach kurzer Zeit bauen sich an den Grubberstielen Stroh- und Pflanzenteile auf, so daß der Raum zwischen den einzelnen Grubberstielen sehr schnell verstopft.

Man hat hier bei diesem bekannten Stand der Technik dadurch Abhilfe zu schaffen versucht, indem das nachlaufenden Bodenbearbeitungsgerät, hier eine Bodenfräse zu den Grubberstielen so angeordnet wird, daß die Grubberstiele sich zwischen den Bodenbearbeitungswerkzeugen der Fräse befinden, so daß die Bodenbearbeitungswerkzeuge die sich evtl. an den Grubberstielen ansammelnden Pflanzen- und Strohteilen entfernen.

Diese Lösung hat jedoch sehr viele Nachteile. Insbesondere läßt sich diese Lösung nicht mit zapfwellenangetriebenen Bodenbearbeitungsmaschinen verwirklichen, deren Werkzeuge um aufrechte Achsen rotieren.

Des weiteren ist durch die DE-OS 37 23 615 ein weiterer Grubber bekannt geworden. Um bei diesem Grubber das Verstopfen zwischen den Grubberzinken und dem Rahmen zu vermeiden, ist vor den Grubberstielen unterhalb des Rahmens eine rotierende Misch- und Krumelwalze angeordnet, welche über ein Getriebe von der Zapfwelle des Schleppers angetrieben wird. Nachteilig ist bei diesem Vorschlag, daß er sehr teuer und aufwendig ist.

Der Erfindung liegt daher die Aufgabe zugrunde, auf einfache Weise eine verstopfungsfreie Arbeit des Grubbers zu ermöglichen, wobei insbesondere das Festsetzen von Boden oder auf dem Boden befindlichen Teilen, wie Stroh etc. am Grubberstiel verhindert werden soll.

Diese Aufgabe wird erfindungsgemäß durch die kennzeichnenden Maßnahmen des Patentanspruches 1 gelöst.

Infolge dieser Maßnahmen wird in einfachster und kostengünstiger Weise durch das in sich verdrehte seitwärts schräg zulaufende Scharblatt gewährleistet, daß die an dem Grubberstiel aufsteigenden Pflanzen-, Stroh- oder Bodenteile seitlich am Grubberstiel vorbeigelenkt werden. Diese Lösung läßt sich bei allen Grubbern oder Tiefenlockerern auch noch nachträglich leicht verwirklichen. Dadurch, daß der an dem Scharblatt aufsteigende Boden und/oder Bodenteile an den unteren Dreipunktkupplungsanschlußelementen vorbeigeleitet wird, wird eine Verstopfung vor allem im Mittelbereich des Grubbers vermieden. Der Raum ist hier sehr eng, da der Zwischenraum zwischen den Grubberstielen durch die Dreipunktkupplungselemente eingeengt wird. Durch diese Maßnahme wird hier jedoch erreicht, daß auch in diesem Bereich ein Verstopfen sicher vermieden wird.

Durch das DE-GM 81 04 456, die US-PS 37 62 483 und die DEOS 30 19 677 sind in sich gedrehte Grubberschare bekannt. Nach dem deutschen Gebrauchsmuster 81 04 456 werden diese gedrehten Grubberschare nur bei den äußeren Grubberscharen angewendet, um das Erdreich im Arbeitsbereich des Grubbers zu halten. Bei der Maschine nach der der US-PS 37 62 483 und DE-OS 30 19 677 sind die Grubberschare verdreht, um den Boden zu wenden. Weder die erfindungsgemäße Lösung noch der erfindungsgemäß erreichte Vorteil sind bei diesen bekannten Stand der Technik erreichbar.

Um eine äußerst sichere verstopfungsfreie Arbeit des Grubbers zu gewährleisten, ist erfindungsgemäß vorgesehen, daß an allen Grubberstielen ein in sich verdrehtes Scharblatt zugeordnet ist.

Um auch bei schneller Fahrt, so bei Einsatzfällen, wenn viel Stroh auf der Bodenoberfläche liegt, ein Verstopfen sicher zu vermeiden, ist das Scharblatt so verdreht, daß das untere Ende des Scharblattes in Fahrtrichtung gesehen sich fluchtend vor dem Scharstiel und das obere Ende sich seitwärts des Scharstieles befindet.

Um unterschiedliche Arbeitsweisen mit dem Grubber und dem dahinter angeordneten Bodenbearbeitungsgerät verwirklichen zu können, ist erfindungsgemäß vorgesehen, daß die Grubberstiele mit den Flügelscharen höhenverstellbar gegenüber dem Tragrahmen angeordnet sind. Hierdurch ist es möglich, den Grubber einmal als Tiefenlockerer oder ein anderes Mal als reinen Vorlockerer einzusetzen und so auch an die Arbeitstiefe des nachfolgenden Bodenbearbeitungsgerätes anpassen zu können.

Um einen möglichst großen Durchgang zwischen dem Tragrahmen und den Flügelscharen zu gewährleisten und auch eine verstopfungsfreie Arbeit des Grubbers auf mit vielen Stroh bedeckten Böden zu gewährleisten, ist erfindungsgemäß vorgesehen, daß der Tragbalken sich auf Höhe oder unmittelbar unterhalb des oberen Dreipunktanschlußelementes befindet, und daß an dem Tragrahmen sich nach unten erstreckende Haltearme vorgesehen sind, an den die unteren Dreipunktklupplungselemente angeordnet sind.

Eine äußerst einfache Montage des Scharblattes an den Grubberstielen ergibt sich dadurch, daß das Scharblatt jeweils mittels einer Aufstecktasche an den jeweiligen Grubberstielen befestigt ist.

Verschiedene Arbeitsweisen lassen sich dadurch ermöglichen, daß das Scharblatt auf dem Grubberstiel in der Höhe verstellbar angeordnet ist.

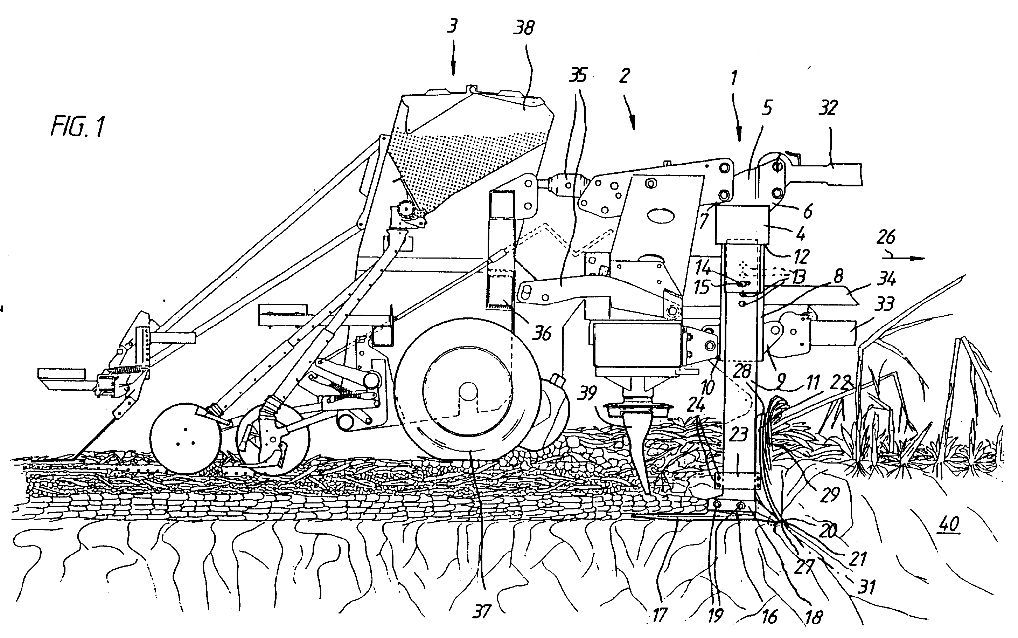

Weitere Einzelheiten der Erfindung sind den übrigen Unteransprüchen, der Beispielsbeschreibung und den Zeichnungen zu entnehmen. Hierbei zeigen
- Fig. 1: eine Gerägekombination bestehend aus einem Grubber, einem nachgeordneten zapfwellenangetriebenen Bodenbearbeitungsgerät und einer nachgeordneten Andruckwalze mit Sämaschine in der Seitenansicht,
- Fig. 2: den Grubber in der Ansicht von vorne und
- Fig. 3: die Anordnung des Scharblattes an dem Grubberstiel in der Seitenansicht und in vergrößerter Darstellung.

Die Gerätekombination besteht aus dem Grubber 1, dem zapfwellenangetriebenen Bodenbearbeitungsgerät 2 und der Walzendrillmaschine 3. Der Grubber 1 ist als Tiefenlockerer ausgebildet. Der Grubber 1 weist den zentralen Tragbalken 4 auf. An dem Tragbalken 4 ist das obere Dreipunktkupplungselement 5 angeordnet, welches auf der Vorderseite die schlepperseitigen Anschlußelemente 6 und auf der Rückseite das geräteseitige Anschlußelement 7 aufweist. Der Tragbalken 4 befindet sich also auf Höhe bzw. unmittelbar unterhalb des oberen Dreipunktanschlußelementes 5. Des weiteren sind an dem Tragbalken 4 zwei im Abstand zueinander angeordnete Haltearme 8 angeordnet, welche an ihrer Unterseite die schlepperseitigen unteren Dreipunktkupplungselemente 9 und auf der Rückseite die geräteseitigen unteren Anschlußelemente 10 aufweisen.

An den Tragbalken 4 sind auf dessen Unterseite zur Befestigung der Grubberstiele 11 als Befestigungstaschen 12 ausgebildete Befestigungselemente angeordnet. Der Grubberstiel 11 weist mehrere übereinander angeordnete Löcher 13 auf. Die Befestigungstasche 12 weist jeweils zumindest eine Bohrung 14 auf. Durch die Bohrung 14 und ein Loch 13 ist ein Bolzen 15 steckbar, welcher den Grubberstiel 11 in der eingestellten Lage hält. Dadurch, daß mehrere Löcher 13 vorgesehen sind, ist der Grubberstiel in der Höhe verstellbar. Um einen ausreichend großen Verstellbereich für die Grubberstiele 11 zu erhalten weist der Tragbalken oberhalb den Innenkonturen der Befestigungstasche 12 entsprechende Aussparungen auf.

Am unteren Ende 16 des Grubberstieles 11 sind die seitlich von dem Grubberstiel abstehenden Flügelschare 17 zur Bodenlockerung angebracht. Mittels einer Klemmlasche 18 und den Schrauben 19 ist oberhalb der Flügelschare 17 an dem Grubberstiel 11 die Grubberspitze 20 befestigt.

Des weiteren ist ein sich von dem vordersten Ende 21 der Grubberspritze 20 sich aufrecht erstreckende Scharblatt 22 mittels der Klemmlasche 23 und den Schrauben 24 oberhalb der Flügelschare am Grubberstiel 11 befestigt. Die in sich verdrehten Scharblätter 22 sind an allen Grubberstielen 11 befestigt. Das Scharblatt 22 weist eine Quererstreckung 25 quer zur Fahrtrichtung 26 auf. Das Scharblatt 22 ist ausgehend von seinem unteren Ende 27 bis zu seinem oberen Ende 28 um etwa 10 bis 50° vorzugsweise um 30° in sich verdreht. Das Scharblatt ist also in sich so verdreht, daß der am Scharblatt 22 aufsteigend entlanggleitende Boden oder Bodenteile 29 an dem Grubberstiel 11 entsprechend des Pfeiles 30 jeweils vorbeigelenkt wird. Des weiteren befindet sich das untere Ende 27 des Scharblattes 22 etwa vor dem Grubberstiel 11, während das obere Ende 28 des Scharblattes 22 sich seitwärts des Grubberstieles 11 befindet.

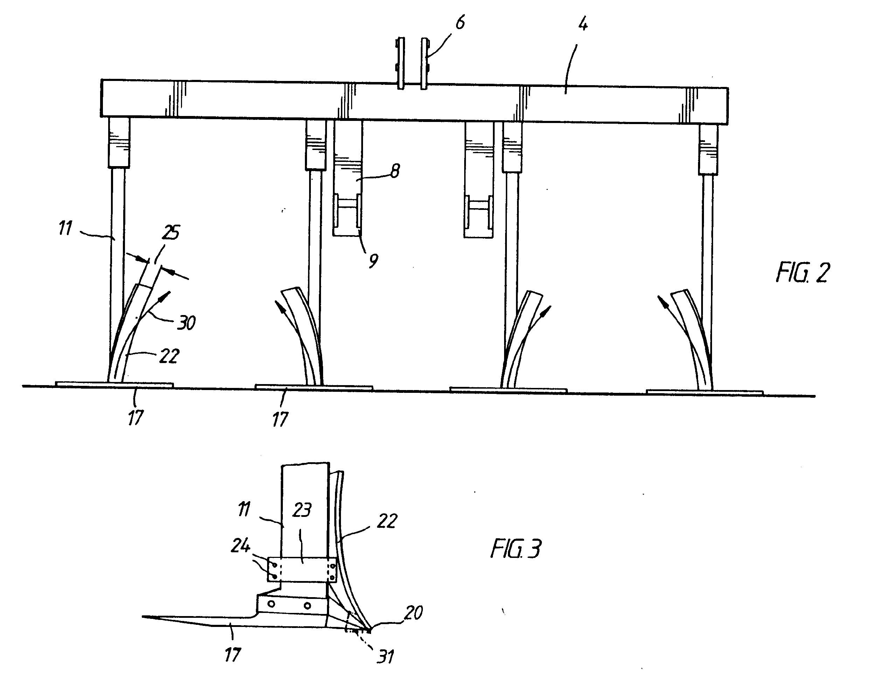

Die an den an dem unteren Kupplungselementen 9 bzw. den Haltearmen 8 unmittelbar benachbarten Grubberstielen 11 befestigten Scharblätter 22 sind derart in sich verdreht, daß der an dem Scharblatt aufsteigend entlanggleitende Boden und/oder Bodenteile an den unteren Dreipunktkupplungsanschlußelementen 9 bzw. den Haltearmen 8 vorbeigelenkt werden, wie dieses Figur 2 zeigt.

Die an den äußeren Grubberstielen 11 befestigten Scharblätter 22 sind derart in sich verdreht, daß der Boden in Richtung der Grubbermitte gelenkt wird, so daß diese Bodenteile im Arbeitsbereich des Grubbers 1 gehalten werden.

Durch die Befestigung der Scharblätter 22 mittels der Klemmlasche 23 auf dem Grubberstiel 24 ist es möglich, das Scharblatt 22 gegenüber den Flügelscharen 17 in der Höhe zu verstellen.

Insbesondere wenn der Grubber 1 als Tiefenlockerer ausgebildet und als solcher eingesetzt wird, ist es zweckmäßig, für diesen Einsatzfall Scharblätter 22 vorzusehen, die an ihrem unteren Ende 27 eine unten offene Aufstecklasche 31 aufweisen, die mit strichpunktierten Linien angedeutet ist. Diese Aufstecklasche 31 faßt auf das vorderste Ende der Grubberspitze 20. Hierdurch wird ein sicherer Halt des Scharblattes 22 auch im untersten Bereich sicher selbst bei schwierigsten Einsatzbedingungen gewährleistet.

Über die Dreipunktanschlußelemente 5 und 9 ist der Grubber an den Oberlenker 32 und die beiden Unterlenker 33 des Dreipunktkrafthebers eines Ackerschleppers anzukuppeln. An den rückseitigen Anschlußelementen 17 ist die Bodenbearbeitungsmaschine 2 angekuppelt. Die Bodenbearbeitungsmaschine 2 wird über die an der Zapfwelle eines Ackerschleppers angekuppelte Gelenkwelle 34 angetrieben. Hinter der Bodenbearbeitungsmaschine 2 ist über die Dreipunktkupplungselemente 35 die Walzendrillmaschine 3 angekuppelt. Die Walzendrillmaschine 3 weist den Tragrahmen 36 auf. An dem Tragrahmen 36 ist die Nachlaufwalze 37 gelagert. Des weiteren ist auf dem Tragrahmen 36 der Saatkasten 38 angeordnet. Die Nachlaufwalze 37 bestimmt die Eingriffstiefe der Bodenbearbeitungswerkzeuge der Bodenbearbeitungsmaschine 2 sowie die Eingriffstiefe der Flügelschare 17 in dem Boden 40.

## Patentansprüche

1. Grubber, insbesondere Tiefenlockerer zur Kombination mit einer nachgeordneten zapfwellenangetriebenen Bodenbearbeitungsmaschine (2), welcher einen zentralen, sich quer zur Fahrtrichtung erstreckenden Tragbalken (4) aufweist, an dem nach unten ragenden Grubberstiele (11) befestigt sind, die an ihrem unteren Ende seitlich anstehende Flügelschare (17) zur Bodenlockerung aufweisen, wobei an dem Tragbalken (4) obere und untere Dreipunktkupplungsanschlußelemente (5,6,8,9) befestigt sind, über welche der Grubber an den Dreipunktkraftheber eines Ackerschleppers oder anderen Maschinen ankuppelbar ist, dadurch gekennzeichnet, daß an den zumindest den unteren Dreipunktkupplungselementen (8,9) unmittelbar benachbarten sowie den seitlich äußeren Grubberstielen (11) und/oder an den Flügelscharen (17) jeweils ein aufrecht verlaufendes und eine Breitenerstreckung (25) quer zur Fahrtrichtung (26) aufweisendes Scharblatt (22) angeordnet ist, daß die Scharblätter (22) in sich verdreht sind, und zwar derart, daß der an den den Dreipunktkupplungselementen benachbarten Scharblättern (22) aufsteigend entlang gleitende Boden (29) und/oder Bodenteile (29) an dem Grubberstiel (11) und zusätzlich an den unteren Dreipunktkupplungsanschlußelementen (8,9) vorbei und der an den äußeren Scharblättern (22) aufsteigend entlang gleitende Boden (29) und/oder Bodenteile (29) an dem Grubberstiel (11) vorbei und zusätzlich zur Machinenmitte gelenkt wird.

2. Grubber nach Anspruch 1, dadurch gekennzeichnet, daß allen Grubberstielen (11) ein in sich verdrehtes Scharblatt (22) zugeordnet ist.

3. Grubber nach einem oder mehreren der vorstehenden Ansprüche, dadurch gekennzeichnet, daß das untere Ende (27) des Scharblattes (22) in Fahrtrichtung (26) gesehen sich fluchtent vor dem Scharstiel (11) und das obere Ende (28) sich seitwärts des Scharstieles (11) befindet.

4. Grubber nach einem oder mehreren der vorstehenden Ansprüche, dadurch gekennzeichnet, daß das Scharblatt (22) am Grubberstiel (11) und an der Scharspitze der Grubberspitze (20) befestigt ist.

5. Grubber nach einem oder mehreren der vorstehenden Ansprüche, dadurch gekennzeichnet, daß die Grubberstiele (11) mit den Flügelscharen (17) höhenverstellbar gegenüber dem Tragrahmen (4) angeordnet sind.

6. Grubber nach einem oder mehreren der vorstehenden Ansprüche, dadurch gekennzeichnet, daß der Tragbalken (4) sich auf Höhe oder unmittelbar unterhalb des oberen Dreipunktkupplungsanschlußelementes (5,6) befindet, und daß an dem Tragbalken (4) sich nach unten erstreckende Haltearme (8) vorgesehen sind, an dem die unteren Dreipunktkupplungselemente (9,10) angeordnet sind.

7. Grubber nach einem oder mehreren der vorstehenden Ansprüche, dadurch gekennzeichnet, daß der Grubber (1) auf seiner Rückseite mit Dreipunktkupplungsanschlußelemente (7,10) zum Anschluß eines nachgeordneten Bodenbearbeitungsgerätes (2) oder einer nachgeordneten zapfwellenangetriebenen Bodenbearbeitungsmaschine (2) ausgestattet ist.

8. Grubber nach einem oder mehreren der vorstehenden Ansprüche, dadurch gekennzeichnet, daß das Scharblatt (22) jeweils mittels einer Aufstecktasche (23) an dem Grubberstiel (11) befestigt ist.

9. Grubber nach einem oder mehreren der vorstehenden Ansprüche, dadurch gekennzeichnet, daß das Scharblatt (22) auf dem Stiel (11) in der Höhe verstellbar angeordnet ist.

## Claims

1. Cultivator, more especially a deep-working loosening means, for combination with a subsequently disposed ground cultivating machine (2), which is driven by the power take-off shaft and has a central supporting beam (4), which extends transversely relative to the direction of travel and on which are mounted downwardly protruding cultivator struts (11), which have at their lower ends laterally protruding vane-type coulters (17) for loosening the ground, upper and lower three-point connection members (5, 6, 8, 9) being mounted on the supporting beam (4), through the intermediary of which connection members the cultivator is connectable to the three-point hydraulic lift of a tractor or other machines, characterised in that a vertically extending coulter blade (22), which has a width extension (25) transversely relative to the direction of travel (26), is disposed on each of the laterally external cultivator struts (11), which are immediately adjacent at least the lower three-point connection members (8, 9), and/or on each of the vane-type coulters (17), in that the coulter blades (22) are turned in on themselves in such a manner that the soil (29) and/or soil particles (29), which slides and/or slide in ascending manner along the coulter blades (22) adjacent the three-point connection members, is and/or are directed past the cultivator strut (11) and additionally past the lower three-point connection members (8, 9), and the soil (29) and/or soil particles (29), which slides and/or slide in ascending manner along the outer coulter blades (22), is and/or are directed past the cultivator strut (11) and additionally towards the centre of the machine.

2. Cultivator according to claim 1, characterised in that a coulter blade (22), which is turned in on itself, is associated with each of the cultivator struts (11).

3. Cultivator according to one or more of the preceding claims, characterised in that, when viewed with respect to the direction of travel (26), the lower end (27) of the coulter blade (22) is in alignment in front of the coulter strut (11) and the upper end (28) is situated laterally of the coulter strut (11).

4. Cultivator according to one or more of the preceding claims, characterised in that the coulter blade (22) is mounted on the cultivator strut (11) and at the coulter tip of the cultivator tip (20).

5. Cultivator according to one or more of the preceding claims, characterised in that the cultivator struts (11), provided with the vane-type coulters (17), are disposed so as to be vertically adjustable relative to the supporting beam (4).

6. Cultivator according to one or more of the preceding claims, characterised in that the supporting beam (4) is situated on a level with or immediately beneath the upper three-point connecting member (5, 6), and in that downwardly extending retaining arms (8) are provided on the supporting beam (4), the lower three-point connection members (9, 10) being disposed on said arms.

7. Cultivator according to one or more of the preceding claims, characterised in that the cultivator (1) is provided on its rear end with three-point connection members (7, 10) for the connection of a subsequently disposed ground cultivating implement (2) or a subsequently disposed ground cultivating machine (2), which is driven by the power take-off shaft.

8. Cultivator according to one or more of the preceding claims, characterised in that each coulter blade (22) is secured on the cultivator strut (11) by means of a slip-over clip (23).

9. Cultivator according to one or more of the preceding claims, characterised in that the coulter blade (22) is disposed on the strut (11) in a vertically adjustable manner.

## Revendications

1. Outil pour le travail du sol, notamment décompacteur destiné à être combiné avec une machine (2) pour le travail du sol, montée en aval et entraînée à partir de la prise de force, cet outil ayant une poutre de support (4) centrale, s'étendant transversalement à la direction de déplacement, et portant des tiges (11) dirigées vers le bas et chaque tige comporte à son extrémité inférieure des socs à ailes (17) en saillie latéralement, pour ameublir le sol, la poutre (4) portant des éléments supérieurs et inférieurs de raccordement à l'attelage en trois points (5, 6, 8, 9), éléments par lesquels l'outil d'ameublissement se monte sur le moyen de levage en trois points d'un tracteur agricole ou autre machine, outil caractérisé en ce qu'au moins les tiges (11) directement voisines des éléments inférieurs (8, 9) de l'attelage en trois points et les tiges latéralement les plus à l'extérieur et/ou sur les socs à ailes (17), sont équipées d'une lame de soc (22) montante et présentant une largeur (25) transversalement à la direction de déplacement (26), les lames de soc (22) étant torses de façon que le sol (29) et/ou les mottes (29), qui remontent en glissant le long des lames de soc (22) voisines des éléments d'attelage en trois points, soient déviés par rapport à la tige (11) ainsi que par rapport aux éléments inférieurs (8, 9) d'attelage en trois points et que le sol (29) et/ou les mottes (29), qui remontent en glissant le long des lames de soc (22) extérieures, soient déviés par rapport aux tiges (11) et renvoyés vers le milieu de la machine.

2. Outil d'ameublissement selon la revendication 1, caractérisé en ce que toutes les tiges (11) comportent une lame de soc (22) torse.

3. Outil d'ameublissement selon une ou plusieurs des revendications précédentes, caractérisé en ce que, vue dans la direction de déplacement (26), l'extrémité inférieure (27) de la lame de soc (22) se trouve dans l'alignement et en avant de la tige (11) et son extrémité supérieure (28) est à côté de la tige (11).

4. Outil d'ameublissement selon une ou plusieurs des revendications précédentes, caractérisé en ce que la lame de soc (22) est fixée à la tige (11) et à la pointe de soc (22) de l'outil.

5. Outil d'ameublissement selon une ou plusieurs des revendications précédentes, caractérisé en ce que les tiges (11) et les socs à ailes (17) sont réglables en hauteur par rapport au châssis (4).

6. Outil selon une ou plusieurs des revendications précédentes, caractérisé en ce que la poutre (4) se trouve à la hauteur de l'élément supérieur (5, 6) de l'attelage en trois points ou directement en-dessous de cet élément et des bras de fixation (8), dirigés vers le bas, sont prévus sur la poutre (4), bras portant les éléments inférieurs (9, 10) de l'attelage en trois points.

7. Outil d'ameublissement selon une ou plusieurs des revendications précédentes, caractérisé en ce que l'outil (1) est muni, sur son côté arrière, d'éléments d'attelage en trois points (7, 10) pour recevoir une machine (2) aval pour le travail du sol ou une machine (2), en aval, entraînée par la prise de force.

8. Outil d'ameublissement selon une ou plusieurs des revendications précédentes, caractérisé en ce que la lame de soc (22) est fixée à la tige (11) par l'intermédiaire d'une patte (23).

9. Outil d'ameublissement selon une ou plusieurs des revendications précédentes, caractérisé en ce que la lame de soc (22) est fixée de manière réglable en hauteur sur la tige (11).
